(19) **Europäisches Patentamt**
**European Patent Office**
**Office européen des brevets**

(11) **EP 3 085 664 B1**

(12) **EUROPEAN PATENT SPECIFICATION**

(45) Date of publication and mention
of the grant of the patent:
**21.08.2019 Bulletin 2019/34**

(51) Int Cl.:
***C01B 32/23*** *(2017.01)*  ***C01B 32/192*** *(2017.01)*
***C01B 25/00*** *(2006.01)*

(21) Application number: **13900834.6**

(86) International application number:
**PCT/CN2013/091214**

(22) Date of filing: **31.12.2013**

(87) International publication number:
**WO 2015/100664 (09.07.2015 Gazette 2015/27)**

(54) **MIXED-ACID SYSTEM-BASED METHOD FOR PREPARATION OF GRAPHENE OXIDE**

AUF MISCHSÄURESYSTEM BASIERTES VERFAHREN ZUR HERSTELLUNG VON
GRAPHENOXID

PROCÉDÉ BASÉ SUR UN MÉLANGE DE SYSTÈMES ACIDES SERVANT À LA PRÉPARATION
D'OXYDE DE GRAPHÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.10.2016 Bulletin 2016/43**

(60) Divisional application:
**17205779.6 / 3 312 142**

(73) Proprietor: **Shenzhen Cantonnet Energy Services
Co. , Ltd.
Shenzhen, Guangdong 518000 (CN)**

(72) Inventors:
• **ZHANG, Linde
Shenzhen
Guangdong 518000 (CN)**
• **ZHANG, Mingdong
Shenzhen
Guangdong 518000 (CN)**

(74) Representative: **Sun, Yiming
HUASUN Patent- und Rechtsanwälte
Friedrichstraße 33
80801 München (DE)**

(56) References cited:
**WO-A1-2011/019095     WO-A1-2012/145911
CN-A- 102 897 757      KR-A- 20130 117 388
US-A1- 2012 129 736    US-A1- 2012 201 738
US-A1- 2013 087 446**

• **MUHAMMAD HAFIZ SYED ET AL: "A practical
carbon dioxide gas sensor using
room-temperature hydrogen plasma reduced
graphene oxide", SENSORS AND ACTUATORS
B: CHEMICAL: INTERNATIONAL JOURNAL
DEVOTED TO RESEARCH AND DEVELOPMENT
OF PHYSICAL AND CHEMICAL TRANSDUCERS,
ELSEVIER BV, NL, vol. 193, 12 December 2013
(2013-12-12), pages 692-700, XP028818856, ISSN:
0925-4005, DOI: 10.1016/J.SNB.2013.12.017**
• **HUA FENG ET AL: "Fabrication of Spirocyclic
Phosphazene Epoxy-Based Nanocomposites
with Graphene via Exfoliation of Graphite
Platelets and Thermal Curing for Enhancement
of Mechanical and Conductive Properties",
INDUSTRIAL & ENGINEERING CHEMISTRY
RESEARCH., vol. 52, no. 30, 31 July 2013
(2013-07-31) , pages 10160-10171, XP55314838,
US ISSN: 0888-5885, DOI: 10.1021/ie400483x**
• **DATABASE WPI Week 201413 Thomson
Scientific, London, GB; AN 2014-B61862
XP002763638, -& CN 103 408 000 A (UNIV
HEILONGJIANG SCI & TECHNOLOGY) 27
November 2013 (2013-11-27)**
• **DATABASE WPI Week 201323 Thomson
Scientific, London, GB; AN 2012-F56752
XP002763639, & CN 102 431 998 A (SHENZHEN
CHANGYIJINGXIN INVESTMENT CO) 2 May 2012
(2012-05-02)**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**(Cont. next page)**

- **DATABASE WPI Week 201452 Thomson Scientific, London, GB; AN 2014-N05569 XP002763613, & CN 103 787 316 A (SHENZHEN YUEWANG ENERGY SAVING TECH SERV) 14 May 2014 (2014-05-14)**
- **DATABASE WPI Week 201553 Thomson Scientific, London, GB; AN 2015-41950W XP002766533, & WO 2015/106437 A1 (SHENZHEN CANTONNET ENERGY SERVICES CO) 23 July 2015 (2015-07-23)**

Remarks:

The file contains technical information submitted after the application was filed and not included in this specification

## Description

## BACKGROUND

### Technical Field

The present invention relates to a method for preparing graphene oxide, and particularly to a method for preparing graphene oxide based on a mixed-acid system.

### Related Art

Since pyrolytic graphite was successfully exfoliated and graphene was observed by Andre Geim and Konstanin Novoselof from University of Manchester in UK in 2004 (Novoselov, K.S.; Geim, A.K.; Morozov, S.V.; Jiang, D.; Zhang, Y.; Dubonos, S.V.; Grigorieva, I.V.; Firsov, A.A.Science 2004, 306, 666-9), the new carbon materials have always been a hot topic in relevant areas. The successful separation of graphene breaks the prediction about thermal instability of two-dimensional crystal theoretically, and brings about the possibilities for more investigations and explorations in new fields.

Perfect graphene is supposed to own an ideal two-dimensional structure consisting of hexagonal lattices. Every single carbon atom is bonded to other three carbon atoms by a $\sigma$ bond in the direction of a lattice plane, and electrons failed to form a $\sigma$ bond serve as $\pi$ electrons, forming a $\pi$ orbit system perpendicular to the lattice plane. The $\pi$ electrons could move randomly in a plane, which enables graphene to own good electrical conductivity and sustain electric current whose density is six orders of magnitude more than copper. Graphene also owns record-breaking thermal conductivity. The thermal conductivity of pure graphene could reach 2000-4000 Wm-1.K-1. Graphene also has excellent strength and large surface area. Besides, the special structure of graphene provides unique energy band structure and enables it to have perfect tunneling effect and half-integer quantum hall effect, as well as electrical conductivity that would never fade away. The special characteristics mentioned above guarantee graphene a promising prospect of application in fields of materials and electronic circuits. Therefore, synthesizing graphene in a large scale is in high demand.

There are two traditional ways to synthesize graphene, including physical methods and chemical methods respectively. Properties of graphene thus obtained are different from each other. The physical methods include mechanical exfoliation, electric arc discharge, and ultrasonic dispersion etc. Graphene layers obtained therefrom are comparatively intact, but there are problems like low yield, unstable product quality, requirement of special equipment, and high cost. The chemical methods include bottom-up organic synthesis, oxidation-reduction process, solvothermal method and chemical vapor deposition. In the organic synthesis method, strict requirements are imposed on equipment and raw materials, so it is difficult to achieve mass production in this way. Stable product quality cannot be achieved with the solvothermal method, so the average quality is poor. Chemical vapor deposition costs too high and cannot achieve large-scale production. Among all those methods, the oxidation-reduction process can work with simple equipment, and the quality of graphene obtained through this method is stable. Thus, it is the most suitable method for industrialized production of graphene.

During the preparation of graphene by the oxidation-reduction process, an intermediate of graphene oxide has been involved. Due to various functional groups present on graphene oxide, including epoxy, hydroxyl, carboxyl, and carbonyl etc., it can be dispersed well in an aqueous solution and is capable of forming a stable colloid, so it's easier to chemically modify graphene oxide than graphene. Therefore, the graphene oxide is also a basic raw material for further chemical modification of graphene. However, in any of the preparation processes of graphene oxide, large amounts of strong acid intercalator and strong oxidant are consumed and cause heavy corrosion to equipment. Moreover, during the process of mixing the intercalator and the strong oxidant, a large amount of heat is often released, which might cause violent reaction between the strong oxidant and the intercalator, and even explosion in the case of poor heat dissipation. Moreover, the strong oxidant added is sometimes a solid material. A solid-solid reaction occurs between the solid strong oxidant and the graphite dispersed in the intercalator. The reaction rate of this solid-solid reaction is low and it is difficult to achieve mass production. Therefore, if industrialized mass production of graphene oxide and graphene is desired, problems such as heat release, equipment corrosion, and low reaction rate existing in the preparation of graphene oxide need to be solved.

CN 103 408 000 A discloses a preparation method for oxidized graphene in a large sheet. The method comprises the following steps: uniformly mixing natural scale graphite with the mixed acid of concentrated nitric acid or nitric acid and sulfuric acid in a reactor; adding hydrogen peroxide from the bottom of the reactor; reacting under mixing for 10-60 min; washing with water and drying to obtain layered graphite; mixing the layered graphite with strong acid; adding strong oxidant slowly; performing ultrasound-assisted oxidation reaction in an ice-water bath for 30-60 min after uniform mixing; heating the reaction mixture to 50-60 DEG C and continuing mixing for 6-12 h; adding deionized water and performing ultrasound-assisted mixing reaction for 10-30 min; cleaning the obtained product first with mixed solution of diluted hydrochloric acid and hydrogen perhydrol, then with deionized water; performing centrifugal separation to obtain oxidized graphene.

CN 102 431 998 A discloses a method for preparing high-quality graphene in large scale by intercalation stripping of graphite by chemical method. The main principle and approach are as follows: inserting some reagent into graphite intercalation by chemical method, then adding energy or some reagent to make intercalation material rapidly and violently react to release air and stripping graphite into graphene. Specifically proposed are means of liquid phase stripping, solid phase stripping and two-step liquid phase and solid phase combined stripping. The prepared graphene has high single intercalation quality and few detects since it does not go through oxidation and reduction processes. The oxygen content is only 1.63% and is the lowest in known graphene preparation method by graphite.

US 2012/201738 A1 discloses a method of producing nano-size graphene-based material and an equipment for producing the same. Disclosed is a method of producing graphitic oxide by forcing graphite sulfuric slurry and KMn04 sulfuric solution into a lengthy micro-channel and by sustaining the mixture of the said graphite sulfuric slurry and the said KMn04 sulfuric solution in the said micro-channel at predetermined temperatures, by putting the said aqua solution of hydrogen peroxide to the reaction mixture to terminate oxidation, and by washing and drying the reaction mixture. A method of producing nano-size graphene-based material by exfoliating graphitic oxide by thermal shock in a vertical fluidized furnace is also disclosed.

In addition, in the reduction process of graphene oxide, choices of the reducing agent are also critical. Conventionally, the reduction of graphene oxide is carried out in an alkaline or neutral environment, which causes the agglomeration of graphene oxide in the reduction to graphene, and the reduction reaction would not continue until graphene oxide is dispersed. However, in an acidic environment, graphene oxide is well dispersed and no problem of uneven reduction occurs. So, for the mass reduction process, it is necessary to select an appropriate reducing agent that is suitable for the acid environment.

## SUMMARY

In order to solve problems like large heat release, equipment corrosion, low reaction rate, and agglomeration resulting from alkaline environment in the reduction step when preparing graphene oxide, the present invention provides a method for preparing graphene oxide based on a mixed acid system.

To solve the above problems, the following technical solutions are employed in the present invention.

A method for preparing graphene oxide based on a mixed acid system comprises:

a. Preparation of graphite powder: a raw material of graphite is subjected to water washing, drying and grinding, and then passed through a 75 $\mu$m (200-mesh) sieve to obtain a graphite powder, where the raw material of graphite is crystalline flake graphite.

b. Preparation of first acid system (suspension): the graphite powder obtained in Step a is added to an intercalator that is a first acid component, and ultrasonicated to obtain a graphite-first acid component dispersion containing 0.1-1 g/ml graphite. The first acid component is one of an organic strong acid and an inorganic strong acid, or a combination of two or more thereof. To allow the obtained product to have a good effect, preferably the first acid component is concentrated sulfuric acid, fuming sulfuric acid, concentrated nitric acid, fuming nitric acid, perchloric acid, chlorosulfonic acid, trifluoroacetic acid and sulfamic acid, or a combination of two or more thereof. Further preferably the first acid component is one of concentrated sulfuric acid, fuming nitric acid, perchloric acid, and chlorosulfonic acid, or a combination of two or more thereof.

Then, the graphite-first acid component dispersion is ultrasonically stirred for 0.5-3 h, to obtain a first acid system (suspension), where after treatment in this step, the first acid component is allowed to fully intercalate between layers of graphite.

c. Preparation of second acid system: An oxidant is ground and added to a second acid component for dissolution at a temperature of 40-60°C, to obtain a 0.5-5 g/ml oxidant-second acid component solution. The oxidant includes one of a nitrate, a dichromate, a persulfate, a permanganate, a peroxide, a phosphorus oxide and an iodine oxide, or a combination of two or more thereof, preferably one of potassium permanganate, ammonium persulfate, potassium persulfate, potassium nitrate, phosphorus pentoxide, and diiodine pentoxide, or a combination of two or more thereof. The second acid component is one of an organic weak acid and an inorganic weak acid, or a combination of two or more thereof; to allow the obtained product to have a good quality, the second acid component is preferably one of concentrated phosphoric acid, pyrophosphoric acid, metaphosphoric acid, glacial acetic acid, propionic acid, adipic acid and glutaric acid, or a combination of two or more thereof, and the second acid component is further preferably one of phosphoric acid, glacial acetic acid, and adipic acid, or a combination of two or more thereof.

Then, a long-chain organic acid is added to the oxidant-second acid component solution, where the weight ratio of the graphite powder obtained in Step a to the long-chain organic acid is 100:0.1-1, the long-chain organic acid is a saturated organic acid C10 or more, and the added long-chain organic acid acts as a passivating agent for a colloid, so that the graphene oxide colloid in the product can be uniformly dispersed. To allow the graphene oxide colloid to be more uniformly dispersed, the long-chain organic acid is one of n-decanoic acid, undecenoic acid, lauric acid, myristic acid, hexadecanoic acid (palmitic acid) and octadecanoic acid (stearic acid), or a combination of two or more thereof, and further preferably one of n-decanoic acid, hexadecanoic acid and octadecanoic acid, or a combination of two or more thereof.

Subsequently, the oxidant-second acid component solution to which the long-chain organic acid is added is ultrasonicated for 0.5 h, and naturally cooled, to obtain a second acid system as a solution.

d. Preparation of graphene oxide: The second acid system is added dropwise to the first acid system at a rate of 1-2 drops/sec at a temperature of 40°C, to obtain a mixed solution. The volume of the second acid system added to the first acid system is calculated according to a formula below (depending on the ratio of the first acid system to the second acid system, the oxidation of the graphite can be completed as much as possible under the premise of saving the oxidant, to effectively form the graphite oxide):

$$\frac{C_{\text{Graphite}'}\ V_{\text{First acid system}}}{C_{\text{Oxidant}'}\ V_{\text{Second acid system to be added}}} = 1:2-8$$

in which $C_{\text{graphite}}$ is the mass concentration of graphite in the graphite-first acid component dispersion, where the first acid system is obtained by ultrasonicating the graphite-first acid component dispersion, and the solution, and solute have no loss, so $C_{\text{graphite}}$ is equal to the mass concentration of graphite in first acid system; $V_{\text{first acid system}}$ is the volume of the first acid system, $C_{\text{oxidant}}$ is the mass concentration of the oxidant in the oxidant-second acid component solution, where a very low amount of long-chain fatty acid is added to the oxidant-second acid component solution of the second acid system, which substantially has no impact on the weight of the oxidant; and when the mass concentration of graphite in the second acid system is calculated, the mass concentration of graphite in the oxidant-second acid component solution of the second acid system can be used; and $V_{\text{second acid system to be added}}$ is the volume of the second acid system added to the first acid system.

If the mixed solution is too viscous, a certain amount of second acid system may be added for dilution.

Then, the mixed solution is ultrasonically stirred for 0.5-3 h, added dropwise to water in an environment of 70-100°C for the purpose of hydrolyzing the substance in the mixed solution, and stood for 3-10 min (that is, hydrolysis reaction time), to obtain a combined solution that is a graphite oxide suspension. Heat is released during the hydrolysis reaction.

Therefore, the temperature needs to be controlled between 70-100°C. The volume of water is calculated according to a formula below (where the proportion of water subsequently added exceeds the volume, the salt-precipitation process will not be able to precipitate the graphene oxide successfully, and where the volume of water is below the proportion, the hydrolysis reaction rate is slow and the hydrolysis cannot be fully completed):

$$\frac{C_{Graphite'}\ V_{First\ acid\ system}}{\rho_{\text{Water}'}\ V_{\text{Water}}} = 1:20-50$$

in which $C_{\text{graphite}}$ is the mass concentration of graphite in the graphite-first acid component dispersion, $V_{\text{first acid system}}$ is the volume of the first acid system, $\rho_{\text{water}}$ is the density of water, and $V_{\text{Water}}$ is the volume of water.

Next, the combined solution is ultrasonically stirred for 0.5-3 h, and then centrifuged for 5 min at a rotation speed of 4000 r/min to remove unexfoliated graphite oxide. The supernatant is collected.

Subsequently, a 2-5 wt% ammonium sulfate solution is added to the supernatant for salt precipitation, and filtered under suction. The filter cake is washed with deionized water, then washed with an alcohol, and dried, to obtain graphene oxide. The drying is preferred carried out at a temperature of 45°C for 3 h.

A method for preparing graphene on the basis of graphene oxide prepared through the method above is also disclosed herein and comprises the following steps.

e. The graphene oxide prepared is added to a dispersant with a high boiling point, and ultrasonically dispersed to obtain a 0.1-1 g/ml graphene oxide dispersion.

In this step, the dispersant with a high boiling point is preferably one of 80 wt% phosphoric acid, 85 wt% phosphoric acid, glycerol, ethylene glycol, N-methylpyrrolidone, triethylene glycol and cyclohexanol, or a combination of two or more thereof; and more preferably one of 80 wt% phosphoric acid, glycerol and N-methyl pyrrolidone, or a combination of two or more thereof.

f. A reducing agent is added to the graphene oxide dispersion obtained in Step e, where the reducing agent is one of an organic acid and an organic acid salt, or a combination of two or more of thereof, and the weight ratio of the graphene oxide in the graphene oxide dispersion to the reducing agent is 1:2-8.

In this step, the reducing agent is preferably one of citric acid, gluconic acid, formic acid, ascorbic acid, oxalic acid, sodium citrate, sodium gluconate, sodium formate, sodium ascorbate and sodium oxalate or a combination of two or more thereof; and more preferably one of oxalic acid, sodium citrate, formic acid and sodium formate or a combination of two or more thereof.

g. The graphene oxide dispersion treated with the reducing agent in Step f is heated for 5-30 min in microwave at 400-900 W, and then ultrasonically exfoliated at 100-600 W for 0.5-3 h.

h. Equal volume of water is added to the graphene oxide dispersion treated in Step g, and graphene is obtained after filtering under suction, water washing, and drying, where the drying process is preferably drying for 2 h under vacuum at a temperature of 80°C.

Compared with traditional preparation methods of graphene oxide, the present invention has the following advantages. A mixture of the first acid system and the second acid system is used for preparation in the present invention. With the mixed acid system, the dosage of the strong acid used can be reduced significantly, thus reducing the corrosion of the strong acid to equipment. Meanwhile, the amount of heat release during the preparation process of graphene oxide is reduced, which allows for less deoxy sites on graphene oxide and better dispersity. Besides, in this method, the oxidant is dissolved in the second acid component, and graphite is dispersed in the first acid component. Because the oxidant is dissolved into solution in advance, there is a liquid-liquid interphase reaction occurring in the mixed acid system, which improves the reaction efficiency significantly.

As also disclosed herein, an acidic reducing agent is used to reduce graphene oxide for preparation of graphene. The method allows graphene oxide to well disperse and avoids the agglomeration of graphene oxide when an alkaline reducing agent is used in the conventional method, such that no uneven reduction reaction is caused, the reduction becomes more complete and the reaction efficiency is higher. In addition, the graphene prepared by the method has large layers, large specific surface area and superior effects, and is applicable to large-scale industrial production.

The present invention will be further described in detail below in conjunction with specific embodiments.

## DETAILED DESCRIPTION

Example 1

The crystalline flake graphite as raw material was washed with water, dried, ground, and sieved through a 75 μm (200 mesh) screen, to obtain a fine flake graphite powder. 1 g of the graphite powder was ultrasonically dispersed in 10 ml of concentrated sulfuric acid, to form a 0.1 g/ml graphite-concentrated sulfuric acid dispersion. The dispersion was ultrasonically stirred for 1.5 h at 120 w, to allow the concentrated sulfuric acid to fully intercalate between layers of graphite. In this way, a suspension of graphite with concentrated sulfuric acid intercalated between layers thereof, that is, a first acid system, was obtained. The suspension was dark gray and no obvious heat release was observed.

4 g of potassium permanganate was ground into a fine powder, and added to and dissolved in 8 ml of concentrated phosphoric acid while the dissolution temperature was controlled between 40-60°C, to form a 0.5 g/ml potassium permanganate solution in phosphoric acid. During the dissolution, ultrasonic stirring was utilized to facilitate uniform dissolution, and if any insoluble material was present, mild heating was employed to promote the completion of the dissolution. 0.01 g of octadecanoic acid was additionally added, ultrasonicated for 0.5 h, and then naturally cooled, to obtain a potassium permanganate solution in phosphoric acid, that is, a second acid system. The potassium permanganate solution in concentrated phosphoric acid was brown and viscous, and the heat release was obvious. After cooling to room temperature, a next step was carried out.

The viscous potassium permanganate-phosphoric acid solution was added dropwise to the graphite-sulfuric acid suspension at a rate of 1-2 drops/sec, while the temperature of the reaction system was controlled below 40°C. After mixing, the mixture was ultrasonically stirred for 2 h. After the system became viscous, about 5 ml of concentrated phosphoric acid was added for dilution. The mixed solution was added dropwise to 50 ml of water, and a large amount of heat was released. The temperature was controlled below 70°C, and the reaction was continued for 5 min. After the hydrolysis was completed, the graphite oxide suspension was ultrasonically exfoliated in an acidic environment, and centrifuged at 4000 r/min for 5 min to remove the unexfoliated graphite oxide after ultrasonic stirring for 2 h. The supernatant that was a graphene oxide colloid solution was collected. An equal volume of 4% ammonium sulfate solution was added for salt precipitation, and 1.3 g of graphene oxide, one of the products, was obtained after water washing, alcohol washing, and drying under vacuum at 45°C for 3 h. The yield was 130% based on graphite.

The above graphene oxide was ultrasonically dispersed in 13 ml of an 80% aqueous solution of glycerol, and then 3 g of oxalic acid was added, and mildly heated for facilitating the dissolution. After the oxalic acid was completely dissolved, the solution was heated for 10 min in microwave at 900 w, and ultrasonically exfoliated at 600 w for 2 h. Finally, an equal volume of water was added for dilution, the dispersant was removed by filtration under suction, and 0.85 g of graphene, the other one of the products, was obtained after three times of water washing and drying under vacuum at 80°C for 2 h. The yield was 85% based on graphite.

The products graphene oxide and graphene were characterized by Raman spectroscopy, and both of them have the characteristic D peak, G peak and 2D peak of graphene. The D peak of graphene oxide appears at 1357 cm$^{-1}$, the G peak appears at 1602 cm$^{-1}$, and the 2D peak appears at 2843 cm$^{-1}$. The D peak of graphene appears at 1369 cm$^{-1}$, the G peak appears at 1579 cm$^{-1}$, and the 2D peak appears at 2710 cm$^{-1}$.

Example 2

The crystalline flake graphite as raw material was washed with water, dried, ground, and sieved through a 75 $\mu$m (200 mesh) screen, to obtain a fine flake graphite powder. 1 g of the graphite powder was ultrasonically dispersed in 10 ml of concentrated sulfuric acid, to form a 0.1 g/ml graphite-concentrated sulfuric acid dispersion. The dispersion was ultrasonically stirred for 1.5 h at 120 w, to allow the concentrated sulfuric acid to fully intercalate between layers of graphite. In this way, a suspension of graphite with concentrated sulfuric acid intercalated between layers thereof, that is, a first acid system, was obtained. The suspension was dark gray and no obvious heat release was observed.

4 g of potassium permanganate was ground into a fine powder, and added to and dissolved in 8 ml of concentrated phosphoric acid while the dissolution temperature was controlled between 40-60°C, to form a 0.5 g/ml potassium permanganate solution in phosphoric acid. During the dissolution, ultrasonic stirring was utilized to facilitate uniform dissolution, and if any insoluble material was present, mild heating was employed to promote the completion of the dissolution. 0.01 g of octadecanoic acid was additionally added, ultrasonicated for 0.5 h, and then naturally cooled, to obtain a potassium permanganate solution in phosphoric acid, that is, a second acid system. The potassium permanganate solution in concentrated phosphoric acid was brown and viscous, and the heat release was obvious. After cooling to room temperature, a next step was carried out.

The viscous potassium permanganate-phosphoric acid solution was added dropwise to the graphite-sulfuric acid suspension at a rate of 1-2 drops/sec, while the temperature of the reaction system was controlled below 40°C. After mixing, the mixture was ultrasonically stirred for 2 h. After the system became viscous, about 5 ml of concentrated phosphoric acid was added for dilution. The mixed solution was added dropwise to 50 ml of water, and a large amount of heat was released. The temperature was controlled below 70°C, and the reaction was continued for 5 min. After the hydrolysis was completed, the graphite oxide suspension was ultrasonically exfoliated in an acidic environment, and centrifuged at 4000 r/min for 5 min to remove the unexfoliated graphite oxide after ultrasonic stirring for 2 h.

The supernatant that was a graphene oxide colloid solution was collected. An equal volume of 4% ammonium sulfate solution was added for salt precipitation, and 1.3 g of graphene oxide, one of the products, was obtained after water washing, alcohol washing, and drying under vacuum at 45°C for 3 h. The yield was 130% based on graphite.

The above graphene oxide was ultrasonically dispersed in 13 ml of an 80% aqueous solution of glycerol, and then 3 g of oxalic acid was added, and mildly heated for facilitating the dissolution. After the oxalic acid was completely dissolved, the solution was heated for 10 min in microwave at 900 w, and ultrasonically exfoliated at 600 w for 2 h. Finally, an equal volume of water was added for dilution, the dispersant was removed by filtration under suction, and 0.85 g of graphene, the other one of the products, was obtained after three times of water washing and drying under vacuum at 80°C for 2 h. The yield was 85% based on graphite.

The products graphene oxide and graphene were characterized by Raman spectroscopy, and both of them have the characteristic D peak, G peak and 2D peak of graphene. The D peak of graphene oxide appears at 1360 cm$^{-1}$, the G peak appears at 1605 cm$^{-1}$, and the 2D peak appears at 2845 cm$^{-1}$. The D peak of graphene appears at 1369 cm$^{-1}$, the G peak appears at 1580 cm$^{-1}$, and the 2D peak appears at 2712 cm$^{-1}$.

Example 3

1 g of the same graphite powder as that in Example 1 was taken, and graphene oxide and graphene were prepared therewith by using the traditional Hummers method, which were designated as Comparative Example 1. In the comparative example, the concentration of concentrated sulfuric acid was the same as that in Examples 1 and 2, and the amount of strong acid, reaction efficiency, and presence of precipitate in the graphene oxide solution were used as indicators to test Example 1, Example 2 and Comparative Example 1. The test results are shown in Table 1:

Table 1: Test results of Examples 1-2 and comparative example

|  | Example 1 | Example 2 | Comparative Example 1 |
| --- | --- | --- | --- |
| Amount of strong acid | 10 ml concentrated sulfuric acid | 10 ml concentrated sulfuric acid | 100 ml concentrated sulfuric acid |
| Reaction rate | Faster | Fast | Slow |
| Presence of precipitate in graphene oxide solution | Little | No | Yes |

It can be seen from the above table that when graphene oxide is prepared by the method of the present invention, the amount of strong acid used is obviously lower than that in the conventional method, the reaction efficiency is higher than the conventional method, the reaction is complete in the reaction process, and no graphite particles remained in the graphene oxide solution, so significant improvements are made over the comparative example.

Example 4

The crystalline flake graphite as raw material was washed with water, dried, ground, and sieved through a 75 $\mu$m (200 mesh) screen, to obtain a fine flake graphite powder. 1 g of the graphite powder was ultrasonically dispersed in 10 ml of fuming nitric acid, and ultrasonically stirred for 0.5 h at 120 w, to allow the fuming nitric acid to fully intercalate between layers of graphite. In this way, a suspension of graphite with fuming nitric acid intercalated between layers thereof, that is, a first acid system, was obtained. The suspension was dark gray and no obvious heat release was observed.

4 g of ammonium persulfate was ground into a fine powder, and added to and dissolved in 0.8 ml of pyrophosphoric acid while the dissolution temperature was controlled to 40°C. During the dissolution, ultrasonic stirring was utilized to facilitate uniform dissolution, and if any insoluble material was present, mild heating was employed to promote the completion of the dissolution. 2 mg of n-decanoic acid was additionally added, ultrasonicated for 0.5 h, and then naturally cooled, to obtain an ammonium persulfate solution in pyrophosphoric acid, that is, a second acid system. The second acid system was colorless and viscous, and the heat release was obvious. After cooling to room temperature, a next step was carried out.

0.4 ml of the second acid system was added to the first acid system at a rate of 1-2 drops/sec, during which the temperature of the reaction system was controlled below 40°C. After mixing, the mixture was ultrasonically stirred for 0.5 h. The mixed solution was added dropwise to 20 ml of water, and a large amount of heat was released. The temperature was controlled to 70°C, and the reaction was continued for 3 min. After the hydrolysis was completed, the graphite oxide suspension was ultrasonically exfoliated in an acidic environment, and centrifuged at 4000 r/min for 5 min to remove the unexfoliated graphite oxide after ultrasonic stirring for 0.5 h. The supernatant that was a graphene oxide colloid solution was collected. An equal volume of 2% ammonium sulfate solution was added for salt precipitation, and 1.1 g of graphene oxide, one of the products, was obtained after water washing, alcohol washing, and drying under vacuum at 45°C for 3 h. The yield was 110% based on graphite.

The above graphene oxide was ultrasonically dispersed in 8 ml of 80% phosphoric acid, and then 8 g of citric acid was added, and mildly heated for facilitating the dissolution. After citric acid was completely dissolved, the solution was heated for 5min in microwave at 400 w, and ultrasonically exfoliated at 100 w for 0.5 h. Finally, an equal volume of water was added for dilution, the dispersant was removed by filtration under suction, and 0.78g of graphene, the other one of the products, was obtained after three times of water washing and drying under vacuum at 80°C for 2 h. The yield was 78% based on graphite.

The products graphene oxide and graphene were characterized by Raman spectroscopy, and both of them have the characteristic D peak, G peak and 2D peak of graphene. The D peak of graphene oxide appears at 1363 cm$^{-1}$, the G peak appears at 1602 cm$^{-1}$, and the 2D peak appears at 2843 cm$^{-1}$. The D peak of graphene appears at 1373 cm$^{-1}$, the G peak appears at 1579 cm$^{-1}$, and the 2D peak appears at 2713 cm$^{-1}$.

Example 5

The crystalline flake graphite as raw material was washed with water, dried, ground, and sieved through a 75 $\mu$m (200 mesh) screen, to obtain a fine flake graphite powder. 1 g of the graphite powder was ultrasonically dispersed in 5 ml of chlorsulfonic acid, and ultrasonically stirred for 1 h at 120 w, to allow the chlorsulfonic acid to fully intercalate between layers of graphite. In this way, a suspension of graphite with chlorsulfonic acid intercalated between layers thereof, that is, a first acid system, was obtained. The suspension was dark gray and no obvious heat release was observed.

4 g of potassium persulfate was ground into a fine powder, and added to and dissolved in 2 ml of metaphosphoric acid while the dissolution temperature was controlled to 45°C. During the dissolution, ultrasonic stirring was utilized to facilitate uniform dissolution, and if any insoluble material was present, mild heating was employed to promote the completion of the dissolution. 4 mg of undecenoic acid was additionally added, ultrasonicated for 0.5 h, and then naturally cooled, to obtain a potassium persulfate solution in metaphosphoric acid, that is, a second acid system. The second acid system was colorless and viscous, and the heat release was obvious. After cooling to room temperature, a next step was carried out.

1.5 ml of the second acid system was added to the first acid system at a rate of 1-2 drops/sec, during which the temperature of the reaction system was controlled below 40°C. After mixing, the mixture was ultrasonically stirred for 1 h. The mixed solution was added dropwise to 25ml of water, and a large amount of heat was released. The temperature was controlled to 75°C, and the reaction was continued for 4min. After the hydrolysis was completed, the graphite oxide suspension was ultrasonically exfoliated in an acidic environment, and centrifuged at 4000 r/min for 5 min to remove the unexfoliated graphite oxide after ultrasonic stirring for 1 h. The supernatant that was a graphene oxide colloid solution was collected. An equal volume of 3% ammonium sulfate solution was added for salt precipitation, and 1.3 g of graphene oxide, one of the products, was obtained after water washing, alcohol washing, and drying under vacuum at 45°C for 3 h. The yield was 130% based on graphite.

The above graphene oxide was ultrasonically dispersed in 10 ml of 85% phosphoric acid, and then 2.6 g of gluconic acid was added, and mildly heated for facilitating the dissolution. After the gluconic acid was completely dissolved, the solution was heated for 10 min in microwave at 500 w, and ultrasonically exfoliated at 300 w for 1 h. Finally, an equal volume of water was added for dilution, the dispersant was removed by filtration under suction, and 0.85 g of graphene, the other one of the products, was obtained after three times of water washing and drying under vacuum at 80°C for 2 h. The yield was 85% based on graphite.

The products graphene oxide and graphene were characterized by Raman spectroscopy, and both of them have the characteristic D peak, G peak and 2D peak of graphene. The D peak of graphene oxide appears at 1358 cm$^{-1}$, the G peak appears at 1601 cm$^{-1}$, and the 2D peak appears at 2848 cm$^{-1}$. The D peak of graphene appears at 1371 cm$^{-1}$, the G peak appears at 1580 cm$^{-1}$, and the 2D peak appears at 2706 cm$^{-1}$.

Example 6

The crystalline flake graphite as raw material was washed with water, dried, ground, and sieved through a 75 $\mu$m (200 mesh) screen, to obtain a fine flake graphite powder. 1 g of the graphite powder was ultrasonically dispersed in 2 ml of trifluoroacetic acid, and ultrasonically stirred for 1.5 h at 120 w, to allow the trifluoroacetic acid to fully intercalate between layers of graphite. In this way, a suspension of graphite with trifluoroacetic acid intercalated between layers thereof, that is, a first acid system, was obtained. The suspension was dark gray and no obvious heat release was observed.

4 g of potassium nitrate was ground into a fine powder, and added to and dissolved in 4 ml of glacial acetic acid while the dissolution temperature was controlled to 50°C. During the dissolution, ultrasonic stirring was utilized to facilitate uniform dissolution, and if any insoluble material was present, mild heating was employed to promote the completion of the dissolution. 8 mg of myristic acid was additionally added, ultrasonicated for 0.5 h, and then naturally cooled, to obtain a potassium nitrate solution in glacial acetic acid, that is, a second acid system. The second acid system was colorless and viscous, and the heat release was obvious. After cooling to room temperature, a next step was carried out.

4 ml of the second acid system as a viscous liquid was added to the first acid system at a rate of 1-2 drops/sec, during which the temperature of the reaction system was controlled below 40°C. After mixing, the mixture was ultrasonically stirred for 1.5 h. The mixed solution was added dropwise to 30ml of water, and a large amount of heat was released. The temperature was controlled to 80°C, and the reaction was continued for 5min. After the hydrolysis was completed, the graphite oxide suspension was ultrasonically exfoliated in an acidic environment, and centrifuged at 4000 r/min for 5 min to remove the unexfoliated graphite oxide after ultrasonic stirring for 1.5 h. The supernatant that was a graphene oxide colloid solution was collected. An equal volume of 4% ammonium sulfate solution was added for salt precipitation, and 1.25g of graphene oxide, one of the products, was obtained after water washing, alcohol washing, and drying under vacuum at 45°C for 3 h. The yield was 125% based on graphite.

The above graphene oxide was ultrasonically dispersed in 1.25 ml of 80% N-methyl pyrrolidinone, and then 10 g of formic acid was added, and mildly heated for facilitating the dissolution. After formic acid was completely dissolved, the solution was heated for 15 min in microwave at 600 w, and ultrasonically exfoliated at 400 w for 2 h. Finally, an equal volume of water was added for dilution, the dispersant was removed by filtration under suction, and 0.82g of graphene, the other one of the products, was obtained after three times of water washing and drying under vacuum at 80°C for 2 h. The yield was 82% based on graphite.

The products graphene oxide and graphene were characterized by Raman spectroscopy, and both of them have the characteristic D peak, G peak and 2D peak of graphene. The D peak of graphene oxide appears at 1357 cm$^{-1}$, the G peak appears at 1601 cm$^{-1}$, and the 2D peak appears at 2839 cm$^{-1}$. The D peak of graphene appears at 1367 cm$^{-1}$, the G peak appears at 1582 cm$^{-1}$, and the 2D peak appears at 2707 cm$^{-1}$.

Example 7

The crystalline flake graphite as raw material was washed with water, dried, ground, and sieved through a 75 $\mu$m (200 mesh) screen, to obtain a fine flake graphite powder. 1 g of the graphite powder was ultrasonically dispersed in a mixed acid of 3 ml concentrated sulfuric acid and 7 ml fuming nitric acid, and ultrasonically stirred for 2 h at 120 w, to allow the mixed acid of 3 ml concentrated sulfuric acid and 7 ml fuming nitric acid to fully intercalate between layers of graphite. In this way, a suspension of graphite with the mixed acid of 3 ml concentrated sulfuric acid and 7 ml fuming nitric acid intercalated between layers thereof, that is, a first acid system, was obtained. The suspension was dark gray and no obvious heat release was observed.

8 g of phosphorus pentoxide was ground into a fine powder, and added to and dissolved in 12 ml of propionic acid while the dissolution temperature was controlled to 55°C. During the dissolution, ultrasonic stirring was utilized to facilitate uniform dissolution, and if any insoluble material was present, mild heating was employed to promote the completion of the dissolution. 10 mg of hexadecanoic acid was additionally added, ultrasonicated for 0.5 h, and then naturally cooled, to obtain a phosphorus pentoxide solution in propionic acid, that is, a second acid system. Minor light brown material was formed in the second acid system, and the heat release was obvious. After cooling to room temperature, a next step was carried out.

12ml of the second acid system as a viscous liquid was added to the first acid system at a rate of 1-2 drops/sec, during which the temperature of the reaction system was controlled below 40°C. After mixing, the mixture was ultrasonically stirred for 2 h. The mixed solution was added dropwise to 40ml of water, and a large amount of heat was released. The temperature was controlled to 90°C, and the reaction was continued for 6min. After the hydrolysis was completed, the graphite oxide suspension was ultrasonically exfoliated in an acidic environment, and centrifuged at 4000 r/min for 5 min to remove the unexfoliated graphite oxide after ultrasonic stirring for 2 h. The supernatant that was a graphene oxide colloid solution was collected. An equal volume of 4% ammonium sulfate solution was added for salt precipitation, and 1.46g of graphene oxide, one of the products, was obtained after water washing, alcohol washing, and drying under vacuum at 45°C for 3 h. The yield was 146% based on graphite.

The above graphene oxide was ultrasonically dispersed in 6 ml ethylene glycol, and then 5 g of ascorbic acid was added, and mildly heated for facilitating the dissolution. After the ascorbic acid was completely dissolved, the solution was heated for 20 min in microwave at 700 w, and ultrasonically exfoliated at 300 w for 3 h. Finally, an equal volume of water was added for dilution, the dispersant was removed by filtration under suction, and 0.93 g of graphene, the other one of the products, was obtained after three times of water washing and drying under vacuum at 80°C for 2 h. The yield was 93% based on graphite.

The products graphene oxide and graphene were characterized by Raman spectroscopy, and both of them have the characteristic D peak, G peak and 2D peak of graphene. The D peak of graphene oxide appears at 1364 cm$^{-1}$, the G peak appears at 1602 cm$^{-1}$, and the 2D peak appears at 2851 cm$^{-1}$. The D peak of graphene appears at 1372 cm$^{-1}$, the G peak appears at 1579 cm$^{-1}$, and the 2D peak appears at 2713 cm$^{-1}$.

Example 8

The crystalline flake graphite as raw material was washed with water, dried, ground, and sieved through a 75 $\mu$m (200 mesh) screen, to obtain a fine flake graphite powder. 1 g of the graphite powder was ultrasonically dispersed in a mixed acid of 4 ml chlorsulfonic acid and 2 ml perchloric acid, and ultrasonically stirred for 2.5 h at 120 w, to allow the mixed acid of 4 ml chlorsulfonic acid and 2 ml perchloric acid to fully intercalate between layers of graphite. In this way, a suspension of graphite with the mixed acid of chlorsulfonic acid and perchloric acid intercalated between layers thereof, that is, a first acid system, was obtained. The suspension was dark gray and no obvious heat release was observed.

4 g of diiodine pentoxide was ground into a fine powder, and added to and dissolved in 8 ml of adipic acid while the dissolution temperature was controlled to 60°C. During the dissolution, ultrasonic stirring was utilized to facilitate uniform dissolution, and if any insoluble material was present, mild heating was employed to promote the completion of the dissolution. A mixed acid of 2 mg myristic acid and 3 mg hexadecanoic acid was additionally added, ultrasonicated for 0.5 h, and then naturally cooled, to obtain a diiodine pentoxide solution in myristic acid and hexadecanoic acid, that is, a second acid system. The second acid system is colorless and slightly brownish, and the heat release was obvious. After cooling to room temperature, a next step was carried out.

5 ml of the second acid system as a viscous liquid was added to the first acid system at a rate of 1-2 drops/sec, during which the temperature of the reaction system was controlled below 40°C. After mixing, the mixture was ultrasonically stirred for 2.5 h. The mixed solution was added dropwise to 45ml of water, and a large amount of heat was released. The temperature was controlled to 95°C, and the reaction was continued for 8min. After the hydrolysis was completed, the graphite oxide suspension was ultrasonically exfoliated in an acidic environment, and centrifuged at 4000 r/min for 5 min to remove the unexfoliated graphite oxide after ultrasonic stirring for 2.5 h. The supernatant that was a graphene oxide colloid solution was collected. An equal volume of 5% ammonium sulfate solution was added for salt precipitation, and 1.18 g of graphene oxide, one of the products, was obtained after water washing, alcohol washing, and drying under vacuum at 45°C for 3 h. The yield was 118% based on graphite.

The above graphene oxide was ultrasonically dispersed in 8 ml of triethylene glycol, and then a mixture of 2 g citric acid and 5 g sodium citrate was added, and mildly heated for facilitating the dissolution. After the mixture of citric acid and sodium citrate was completely dissolved, the solution was heated for 25min in microwave at 800 w, and ultrasonically exfoliated at 600 w for 1.5 h. Finally, an equal volume of water was added for dilution, the dispersant was removed by filtration under suction, and 0.81g of graphene, the other one of the products, was obtained after three times of water washing and drying under vacuum at 80°C for 2 h. The yield was 81% based on graphite.

The products graphene oxide and graphene were characterized by Raman spectroscopy, and both of them have the characteristic D peak, G peak and 2D peak of graphene. The D peak of graphene oxide appears at 1357 cm$^{-1}$, the G peak appears at 1606 cm$^{-1}$, and the 2D peak appears at 2849 cm$^{-1}$. The D peak of graphene appears at 1371 cm$^{-1}$, the G peak appears at 1579 cm$^{-1}$, and the 2D peak appears at 2710 cm$^{-1}$.


Example 9

The crystalline flake graphite as raw material was washed with water, dried, ground, and sieved through a 75 $\mu$m (200 mesh) screen, to obtain a fine flake graphite powder. 1 g of the graphite powder was ultrasonically dispersed in 1 ml of concentrated nitric acid, and ultrasonically stirred for 3 h at 120 w, to allow the 1 ml concentrated nitric acid to fully intercalate between layers of graphite. In this way, a suspension of graphite with concentrated nitric acid intercalated between layers thereof, that is, a first acid system, was obtained. The suspension was dark gray and no obvious heat release was observed.

An oxidant mixture of 4 g ammonium persulfate, 3 g potassium nitrate, and 1 g phosphorus pentoxide was ground into a fine powder, and added to and dissolved in 10 ml of glutaric acid while the dissolution temperature was controlled to 48°C. During the dissolution, ultrasonic stirring was utilized to facilitate uniform dissolution, and if any insoluble material was present, mild heating was employed to promote the completion of the dissolution. A mixed acid of 3 mg n-decanoic acid and 6 mg undecenoic acid was additionally added, ultrasonicated for 0.5 h, and then naturally cooled, to obtain a solution of the oxidants in the mixed acid, that is, a second acid system. The second acid system was colorless and viscous, and the heat release was obvious. After cooling to room temperature, a next step was carried out.

10 ml of the second acid system as a viscous liquid was added to the first acid system at a rate of 1-2 drops/sec, during which the temperature of the reaction system was controlled below 40°C. After mixing, the mixture was ultrasonically stirred for 3 h. The mixed solution was added dropwise to 35ml of water, and a large amount of heat was released. The temperature was controlled to 100°C, and the reaction was continued for 10 min. After the hydrolysis was completed, the graphite oxide suspension was ultrasonically exfoliated in an acidic environment, and centrifuged at 4000 r/min for 5 min to remove the unexfoliated graphite oxide after ultrasonic stirring for 3 h. The supernatant that was a graphene oxide colloid solution was collected. An equal volume of 5% ammonium sulfate solution was added for salt precipitation, and 1.4g of graphene oxide, one of the products, was obtained after water washing, alcohol washing, and drying under vacuum at 45°C for 3 h. The yield was 140% based on graphite.

The above graphene oxide was ultrasonically dispersed in 14 ml of cyclohexanol, and then a mixture of 4 g formic acid and 1 g sodium formate was added, and mildly heated for facilitating the dissolution. After the mixture of formic acid and sodium formate was completely dissolved, the solution was heated for 30 min in microwave at 900 w, and ultrasonically exfoliated at 500 w for 2.5 h. Finally, an equal volume of water was added for dilution, the dispersant was removed by filtration under suction, and 0.89 g of graphene, the other one of the products, was obtained after three times of water washing and drying under vacuum at 80°C for 2 h. The yield was 89% based on graphite.

The products graphene oxide and graphene were characterized by Raman spectroscopy, and both of them have the characteristic D peak, G peak and 2D peak of graphene. The D peak of graphene oxide appears at 1365 cm$^{-1}$, the G peak appears at 1601 cm$^{-1}$, and the 2D peak appears at 2851 cm$^{-1}$. The D peak of graphene appears at 1372 cm$^{-1}$, the G peak appears at 1581 cm$^{-1}$, and the 2D peak appears at 2713 cm$^{-1}$.

The amount of strong acid (that is, first acid component) used in Examples 4-9 is significantly less than that in Comparative Example 1 in Example 3, which makes the amount of strong acid required for the reaction significantly lower, avoiding the corrosion to the production equipment caused by excessive consumption of strong acid used in the conventional method. Examples 4-9 were tested for the reaction efficiency and the presence of precipitate in the graphene oxide solution. The results are shown in Table 2:

Table 2: Test Results of Examples 4-9

| | Example 4 | Example 5 | Example 6 | Example 1 | Example 8 | Example 9 |
|---|---|---|---|---|---|---|
| Reaction rate | Faster | Fast | Fast | Faster | Fast | Fast |
| Presence of precipitate in graphene oxide solution | Little | No | Minor | No | No | No |

Compared with the indicators of Comparative Example 1 in Table 1, Examples 4-9 are superior to Comparative Example 1 in terms of strong acid dosage, reaction efficiency and presence of precipitate in graphene oxide solution. It can be seen that the solution of the present invention has significant progress over the prior art.

**Claims**

1. A method for preparing graphene oxide based on a mixed acid system, comprising:

   a. preparation of graphite powder: subjecting a raw material of graphite to water washing, drying and grinding, and then passing through a 75 $\mu$m (200 mesh) sieve to obtain a graphite powder, wherein the raw material of graphite is crystalline flake graphite;
   b. preparation of first acid system: adding the graphite powder obtained in Step a to an intercalator that is a first acid component and ultrasonicating, to obtain a graphite-first acid component dispersion containing 0.1-1 g/ml graphite, wherein the first acid component is one of an organic strong acid and an inorganic strong acid, or a combination of two or more thereof; and
   then, ultrasonically stirring the graphite-first acid component dispersion for 0.5-3 h, to obtain a first acid system;
   c. preparation of second acid system: grinding an oxidant and adding the oxidant to a second acid component for dissolution at a temperature of 40-60°C, to obtain a 0.5-5 g/ml oxidant-second acid component solution, wherein the second acid component is one of an organic weak acid and an inorganic weak acid, or a combination of two or more thereof;
   then, adding a long-chain organic acid to the oxidant-second acid component solution, wherein the weight ratio of the graphite powder obtained in Step a to the long-chain organic acid is 100:0.1-1, and the long-chain organic acid is a saturated organic acid of C10 or more; and
   subsequently, ultrasonicating the oxidant-second acid component solution to which the long-chain organic acid is added for 0.5 h, and naturally cooling, to obtain a second acid system as a solution; and
   d. preparation of graphene oxide: adding the first acid system dropwise to the second acid system at a rate of 1-2 drops/sec at a temperature of 40°C, to obtain a mixed solution, wherein the volume of the first acid system added to the second acid system is calculated according to a formula below:

$$\frac{C_{\text{Graphite}'}\, V_{\text{First acid system}}}{C_{\text{Oxidant}'}\, V_{\text{Second acid system to be added}}} = 1:2-8$$

   in which $C_{\text{Graphite}}$ is the mass concentration of graphite in the graphite-first acid component dispersion, $V_{\text{First acid system}}$ is the volume of the first acid system, $C_{\text{Oxidant}}$ is the mass concentration of graphite in the oxidant-second acid component solution, and $V_{\text{Second acid system to be added}}$ is the volume of the second acid system added to the first acid system;

   then, ultrasonically stirring the mixed solution for 0.5-3 h, adding the mixed solution dropwise to water at 70-100°C, and standing for 3-10 min, to obtain a combined solution, wherein the volume of water is calculated according to a formula below:

$$\frac{C_{Graphite} \cdot V_{First\ acid\ system}}{\rho_{\text{Water}} \cdot V_{\text{Water}}} = 1:20-50$$

in which $C_{Graphite}$ is the mass concentration of graphite in the graphite-first acid component dispersion, $V_{First\ acid\ system}$ is the volume of the first acid system, $\rho_{Water}$ is the density of water, and $V_{Water}$ is the volume of water;

next, ultrasonically stirring the combined solution for 0.5-3 h, then centrifuging for 5 min at a rotation speed of 4000 r/min, and collecting the supernatant; and

subsequently, adding a 2-5 wt% ammonium sulfate solution to the supernatant for salt precipitation, filtering under suction, washing the filter cake with deionized water, then washing with an alcohol, and drying, to obtain graphene oxide.

2. The method for preparing graphene oxide based on a mixed acid system according to claim 1, wherein the first acid component in Step b is one of concentrated sulfuric acid, fuming sulfuric acid, concentrated nitric acid, fuming nitric acid, perchloric acid, chlorosulfonic acid, trifluoroacetic acid and sulfamic acid, or a combination of two or more thereof; or

the oxidant in Step c is one of a nitrate, a dichromate, a persulfate, a permanganate, a peroxide, a phosphorus oxide and an iodine oxide, or a combination of two or more thereof.

3. The method for preparing graphene oxide based on a mixed acid system according to claim 2, wherein the first acid component in Step b is one of concentrated sulfuric acid, fuming nitric acid, perchloric acid, and chlorosulfonic acid, or a combination of two or more thereof; or

the oxidant in Step c is one of potassium permanganate, ammonium persulfate, potassium persulfate, potassium nitrate, phosphorus pentoxide, and diiodine pentoxide, or a combination of two or more thereof.

4. The method for preparing graphene oxide based on a mixed acid system according to claim 1, wherein the second acid component in Step c is one of concentrated phosphoric acid, pyrophosphoric acid, metaphosphoric acid, glacial acetic acid, propionic acid, adipic acid and glutaric acid, or a combination of two or more thereof; or

the long-chain organic acid in Step c is one of n-decanoic acid, undecenoic acid, lauric acid, myristic acid, hexadecanoic acid and octadecanoic acid, or a combination of two or more thereof.

5. The method for preparing graphene oxide based on a mixed acid system according to claim 4, wherein the second acid component in Step c is one of phosphoric acid, glacial acetic acid, and adipic acid, or a combination of two or more thereof; or

the long-chain organic acid in Step c is one of n-decanoic acid, hexadecanoic acid and octadecanoic acid, or a combination of two or more thereof.

## Patentansprüche

1. Verfahren zum Herstellen von Graphenoxid auf der Basis eines gemischten Säuresystems, umfassend:

a. Herstellung von Graphitpulver: Unterziehen eines Rohmaterials von Graphit einer Wasserwaschung, Trocknung und Schleifen und dann Führen durch ein 75 $\mu$m-(200 Mesh)-Sieb, um ein Graphitpulver zu erhalten, wobei das Rohmaterial von Graphit kristalliner Lamellengraphit ist;

b. Herstellung eines ersten Säuresystems: Zufügen des Graphitpulvers, das in Schritt a gewonnen wurde, zu einem Interkalator, der eine erste Säurekomponente ist, und Ultraschallbehandlung, um eine Graphit-erste-Säure-Komponenten-Dispersion zu erhalten, die 0,1-1 g/ml Graphit enthält, wobei die erste Säurekomponente eine aus einer organischen starken Säure und einer anorganischen starken Säure ist oder eine Kombination von zwei oder mehr derselben; und

dann Rühren der Graphit-ersten-Säure-Komponenten-Dispersion mit Ultraschall über 0,5-3 h, um ein erstes Säuresystem zu erhalten;

c. Herstellung des zweiten Säuresystems: Mahlen eines Oxidationsmittels und Hinzufügen des Oxidationsmittels zu einer zweiten Säurekomponente zur Auflösung bei einer Temperatur von 40-60 °C, um eine 0,5-5 g/ml-Oxidationsmittel-zweite-Säure-Komponenten-Lösung zu erhalten, wobei die zweite Säurekomponente eine aus einer organischen schwachen Säure und einer anorganischen schwachen Säure ist oder eine Kombination von zwei oder mehr derselben;

dann Hinzufügen einer langkettigen organischen Säure zu der Oxidationsmittel-zweite-Säure-Komponenten-Lösung, wobei das Gewichtsverhältnis des Graphitpulvers, das in Schritt a erhalten wurde, zur langkettigen organischen Säure 100:0,1-1 beträgt, und die langkettige organische Säure ist eine gesättigte organische Säure von C10 oder mehr; und

anschließend Ultraschallbehandlung der Oxidationsmittel-zweite-Säure-Komponenten-Lösung, der die langkettige organische Säure über 0,5 h zugefügt wird, und natürliches Kühlen, um ein zweites Säuresystem als Lösung zu erhalten; und

d. Herstellung von Graphenoxid: Tropfenweises Zusetzen des ersten Säuresystems zum zweiten Säuresystem mit einer Rate von 1-2 Tropfen/s bei einer Temperatur von 40 °C, um eine gemischte Lösung zu halten, wobei das Volumen des ersten Säuresystems, das dem zweiten Säuresystem hinzugefügt wird, gemäß einer Formel unten berechnet wird:

$$\frac{C_{\text{Graphite}'} \, V_{\text{First acid system}}}{C_{\text{Oxidant}'} \, V_{\text{Second acid system to be added}}} = 1:2-8$$

bei der $C_{\text{Graphite}}$ die Massenkonzentration von Graphit in der Graphit-erste-Säure-Komponenten-Dispersion ist, $V_{\text{First acid system}}$ ist das Volumen des ersten Säuresystems, $C_{\text{Oxidant}}$ ist die Massenkonzentration von Graphit in der Oxidationsmittel-zweite-Säure-Komponenten-Lösung, und $V_{\text{Second acid system to be added}}$ ist das Volumen des zweiten Säuresystems, das dem ersten Säuresystem zugesetzt wird;

dann mit Ultraschall Rühren der gemischten Lösung über 0,5-3 h, Zusetzen der gemischten Lösung tropfenweise zu Wasser bei 70-100 °C, und Stehenlassen über 3-10 min, um eine kombinierte Lösung zu erhalten, wobei das Volumen von Wasser gemäß einer Formel unten berechnet wird:

$$\frac{C_{\text{Graphite}'} \, V_{\text{First acid system}}}{\rho_{\text{Water}'} \, V_{\text{Water}}} = 1:20-50$$

dabei ist $C_{\text{Graphite}}$ die Massenkonzentration von Graphit in der Graphit-erste-Säure-Komponenten-Dispersion, $V_{\text{First acid system}}$ ist das Volumen des ersten Säuresystems, $\rho_{\text{Water}}$ ist die Dichte von Wasser und $V_{\text{Water}}$ ist das Volumen von Wasser;

als nächstes mit Ultraschall Rühren der kombinierten Lösung über 0,5-3 h, dann Zentrifugieren über 5 min bei einer Drehzahl von 4000 U/min und Sammeln des Überstandes; und

anschließend Zufügen einer 2-5 Gew.-%igen Ammoniumsulfatlösung zum Überstand zur Salzausfällung, Filtern unter Saugzug, Waschen des Filterkuchens mit entionisiertem Wasser, dann Waschen mit einem Alkohol und Trocknen, um Graphenoxid zu erhalten.

2. Verfahren zum Herstellen von Graphenoxid auf der Basis eines gemischten Säuresystems nach Anspruch 1, wobei die erste Säurekomponente in Schritt b eine aus konzentrierter Schwefelsäure, rauchender Schwefelsäure, konzentrierter Salpetersäure, rauchender Salpetersäure, Perchlorsäure, Chlorsulfonsäure, Trifluoressigsäure und Sulfaminsäure oder eine Kombination von zwei oder mehr derselben ist; oder

das Oxidationsmittel in Schritt c ist eines aus einem Nitrat, einem Dichromat, einem Persulfat, einem Permanganat, einem Peroxid, einem Phosphoroxid und einem Jodoxid oder eine Kombination von zwei oder mehr derselben.

3. Verfahren zum Herstellen von Graphenoxid auf der Basis eines gemischten Säuresystems nach Anspruch 2, wobei die erste Säurekomponente in Schritt b eine aus konzentrierter Schwefelsäure, rauchender Salpetersäure, Perchlorsäure und Chlorsulfonsäure ist oder eine Kombination von zwei oder mehr derselben; oder

das Oxidationsmittel in Schritt c ist eines aus Kaliumpermanganat, Ammoniumpersulfat, Kaliumpersulfat, Kaliumnitrat, Phosphorpentoxid und Dijodpentoxid oder eine Kombination von zwei oder mehr derselben.

4. Verfahren zum Herstellen von Graphenoxid auf der Basis eines gemischten Säuresystems nach Anspruch 1, wobei die zweite Säurekomponente in Schritt c eine aus konzentrierter Phosphorsäure, Pyrophosphorsäure, Metaphosphorsäure, Eisessig, Propionsäure, Adipinsäure und Glutarsäure ist oder eine Kombination von zwei oder mehr derselben; oder

die langkettige organische Säure in Schritt c ist eine aus n-Decansäure, Undecensäure, Laurinsäure, Myristinsäure, Hexadecansäure und Octadecansäure oder eine Kombination von zwei oder mehr derselben.

**5.** Verfahren zum Herstellen von Graphenoxid auf der Basis eines gemischten Säuresystems nach Anspruch 4, wobei die zweite Säurekomponente in Schritt c eine aus Phosphorsäure, Eisessig und Adipinsäure ist oder eine Kombination von zwei oder mehr derselben; oder
die langkettige organische Säure in Schritt c ist eine aus n-Decansäure, Hexadecansäure und Octadecansäure oder eine Kombination von zwei oder mehr derselben.

**Revendications**

**1.** Procédé pour la préparation d'oxyde de graphène sur la base d'un système acide mixte, comprenant :

a. la préparation d'une poudre de graphite : lavage à l'eau, séchage et broyage d'une matière première de graphite, puis passage à travers un tamis de 75 $\mu$m (maillage de 200) pour obtenir une poudre de graphite, la matière première de graphite étant du graphite cristallin en paillettes ;
b. la préparation d'un premier système acide : ajout de la poudre de graphite obtenue à l'étape a à un intercalateur consistant en un premier composant acide et traitement aux ultrasons pour obtenir une dispersion de graphite et de premier composant acide contenant 0,1-1 g/ml de graphite, le premier composant acide étant l'un parmi un acide puissant organique et un acide puissant inorganique, ou une combinaison de deux ou plusieurs de ceux-ci ; et
puis, l'agitation par ultrasons de la dispersion à base de graphite et de premier composant acide pendant 0,5-3 heures, pour obtenir un premier système acide ;
c. la préparation d'un deuxième système acide : broyage d'un oxydant et ajout de l'oxydant à un deuxième composant acide pour la dissolution à une température de 40 à 60°C, pour obtenir une solution à base de 0,5-5 g/ml de deuxième composant acide et d'oxydant, où le deuxième composant acide est l'un parmi un acide faible organique et un acide faible inorganique, ou une combinaison de deux ou plusieurs de ceux-ci ;
puis, l'ajout d'un acide organique à chaîne longue à la solution à base de deuxième composant acide et d'oxydant, où le rapport pondéral entre la poudre de graphite obtenue à l'étape a et l'acide organique à longue chaîne est de 100:0,1-1, et l'acide organique à longue chaîne est un acide organique saturé de C10 ou plus ; et
consécutivement, le traitement par ultrasons de la solution à base de deuxième composant acide et d'oxydant, à laquelle l'acide organique à longue chaîne est ajouté pendant 0,5 heure, et le refroidissement naturel, pour obtenir un deuxième système acide en solution ; et
d. la préparation d'oxyde de graphène : ajout du premier système acide par gouttes au deuxième système acide à une vitesse de 1-2 gouttes/seconde à une température de 40°C, pour obtenir une solution mixte, où le volume du premier système acide ajouté au deuxième système acide est calculé selon la formule suivante :

$$\frac{C_{\text{Graphite}'} \, V_{\text{First acid system}}}{C_{\text{Oxidant}'} \, V_{\text{Second acid system to be added}}} = 1:2-8$$

où $C_{\text{Graphite}}$ est la concentration massique de graphite dans la dispersion à base de graphite et de premier composant acide, $V_{\text{First acid system}}$ est le volume du premier système acide, $C_{\text{Oxidant}}$ est la concentration massique de graphite dans la solution à base de deuxième composant acide et d'oxydant, et $V_{\text{Second acid system to be added}}$ est le volume du deuxième système acide ajouté au premier système acide ;

puis, l'agitation par ultrasons de la solution mixte pendant 0,5-3 heures, l'ajout de la solution mixte par gouttes à de l'eau à 70-100°C, et le repos pendant 3-10 minutes, pour obtenir une solution combinée, où le volume d'eau est calculé selon la formule suivante :

$$\frac{C_{\text{Graphite}'} \, V_{\text{First acid system}}}{\rho_{\text{Water}'} \, V_{\text{Water}}} = 1:20-50'$$

où $C_{\text{Graphite}}$ est la concentration massique de graphite dans la dispersion à base de graphite et de premier composant acide, $V_{\text{First acid system}}$ est le volume du premier système acide, pwater est la densité de l'eau, et Vwater est le volume d'eau ;

ensuite, l'agitation par ultrasons de la solution combinée pendant 0,5-3 heures, puis la centrifugation pendant 5 minutes à une vitesse de rotation de 4000 tours/minute, et la collecte du surnageant ; et

consécutivement, l'ajout d'une solution de sulfate d'ammonium à 2-5% en poids au surnageant pour la précipitation des sels, le filtrage sous aspiration, le lavage du gâteau de filtre avec de l'eau déminéralisée, puis le lavage avec un alcool, et le séchage, pour obtenir de l'oxyde de graphène.

2. Procédé pour la préparation d'oxyde de graphène à partir d'un système acide mixte selon la revendication 1, dans lequel le premier composant acide à l'étape b est l'un parmi un acide sulfurique concentré, un acide sulfurique fumant, un acide nitrique concentré, un acide nitrique fumant, un acide perchlorique, un acide chlorosulfonique, un acide trifluoroacétique et un acide sulfamique, ou une combinaison de deux ou plusieurs de ceux-ci ; ou l'oxydant à l'étape c est l'un parmi un nitrate, un dichromate, un persulfate, un permanganate, un peroxyde, un oxyde de phosphore et un oxyde d'iode, ou une combinaison de deux ou plusieurs de ceux-ci.

3. Procédé pour la préparation d'oxyde de graphène à partir d'un système acide mixte selon la revendication 2, dans lequel le premier composant acide à l'étape b est l'un parmi un acide sulfurique concentré, un acide nitrique fumant, un acide perchlorique, et un acide chlorosulfonique, ou une combinaison de deux ou plusieurs de ceux-ci ; ou l'oxydant à l'étape c est l'un parmi le permanganate de potassium, le persulfate d'ammonium, le persulfate de potassium, le nitrate de potassium, le pentoxyde de phosphore, et le pentoxyde de diiode, ou une combinaison de deux ou plusieurs de ceux-ci.

4. Procédé pour la préparation d'oxyde de graphène à partir d'un système acide mixte selon la revendication 1, dans lequel le deuxième composant acide à l'étape c est l'un parmi un acide phosphorique concentré, un acide pyrophosphorique, un acide métaphosphorique, un acide acétique glacial, un acide propionique, un acide adipique et un acide glutarique, ou une combinaison de deux ou plusieurs de ceux-ci ; ou l'acide organique à longue chaîne à l'étape c est l'un parmi un acide n-décanoïque, un acide undécénoïque, un acide laurique, un acide myristique, un acide héxadécanoïque et un acide octadécanoïque, ou une combinaison de deux ou plusieurs de ceux-ci.

5. Procédé pour la préparation d'oxyde de graphène à partir d'un système acide mixte selon la revendication 4, dans lequel le deuxième composant acide à l'étape c est l'un parmi un acide phosphorique, un acide acétique glacial, un acide adipique ou une combinaison de deux ou plusieurs de ceux-ci ; ou l'acide organique à longue chaîne à l'étape c est l'un parmi un acide n-décanoïque, un acide héxadécanoïque et un acide octadécanoïque, ou une combinaison de deux ou plusieurs de ceux-ci.

## REFERENCES CITED IN THE DESCRIPTION

**Patent documents cited in the description**

- CN 103408000 A
- CN 102431998 A
- US 2012201738 A1

**Non-patent literature cited in the description**

- **NOVOSELOV, K.S. ; GEIM, A.K. ; MOROZOV, S.V. ; JIANG, D. ; ZHANG, Y. ; DUBONOS, S.V. ; GRIGORIEVA, I.V. ; FIRSOV, A.A.** *Science,* 2004, vol. 306, 666-9